# EUROPÄISCHE PATENTSCHRIFT

(11) **EP 1 765 550 B1**
(45) Veröffentlichungstag und Bekanntmachung des Hinweises auf die Patenterteilung: **13.01.2010**
(21) Anmeldenummer: 05761225.1
(22) Anmeldetag: 08.07.2005
(51) Int. Cl.: B23Q 7/04, B23Q 3/155

(54) **WERKZEUGMASCHINE**
MACHINE TOOL
MACHINE-OUTIL

(30) Priorität: 09.07.2004 DE 102004034932; 07.10.2004 DE 102004050035
(43) Veröffentlichungstag der Anmeldung: 28.03.2007
(73) Patentinhaber: Ex-Cell-O GmbH, 73054 Eislingen/Fils (DE)
(72) Erfinder: BÖHLER, Harald, 88142 Wasserburg (DE); BERGMANN, Stefan, 73433 Aalen (DE); STANIK, Markus, 73095 Albershausen (DE)
(74) Vertreter: Hoeger, Stellrecht & Partner Patentanwälte
(86) Internationale Anmeldenummer: PCT/EP2005/007423
(87) Internationale Veröffentlichungsnummer: WO 2006/005545

(56) Entgegenhaltungen:
- DE-A- 19 708 096
- DE-A- 19 853 945
- DE-A1- 10 235 873
- US-A- 4 641 413
- US-A- 4 706 371
- US-A- 5 803 886
- US-A- 2005 143 236

## Beschreibung

Die Erfindung betrifft eine Werkzeugmaschine mit einem Maschinenbett, mit mindestens einem Werkzeugträger und mindestens einem verfahrbaren Werkstückträger, über den ein oder mehrere Werkstücke zur Bearbeitung positionierbar sind und bei der Bearbeitung gehalten sind, wobei eine Werkzeughalteeinrichtung mit dem mindestens einen Werkstückträger verbunden ist und über den zugeordneten Werkstückträger verfahrbar ist und die Werkzeughalteeinrichtung bezüglich des mindestens einen Werkzeugträgers über den Werkstückträger zum Werkzeugwechsel positionierbar ist, wobei die Bewegungsachsen der Werkzeughalteeinrichtung die Bewegungsachsen des Werkstückträgers sind.

Aus der WO 2004/012888 A1 ist eine Mehrspindel-Werkzeugmaschine bekannt, welche ein Maschinengestell, einen ersten Spindelschlitten mit einer ersten Werkstückspindel als verfahrbaren Werkstückträger sowie einen zweiten Spindelschlitten mit einer zweiten Werkstückspindel als weiteren verfahrbaren Werkstückträger umfasst. Der erste Spindelschlitten und der zweite Spindelschlitten sind in einem linear verschieblichen Maschinengestell geführt. Am Maschinengestell sind dabei eine erste Führung und eine beabstandete zweite Führung angeordnet, an welchen sowohl der erste Spindelschlitten als auch der zweite Spindelschlitten geführt sind. Die erste Werkstückspindel und die zweite Werkstückspindel sind zwischen den beiden Führungen angeordnet.

Aus der US 4,706,371 ist eine Werkzeugmaschine bekannt, welche eine Spindel aufweist, welche in drei Richtungen beweglich ist. An der Spindel ist ein Greifer angeordnet, welcher Werkstücke greifen kann. Über den Greifer kann direkt ein Werkstück aus einem Magazin entnommen werden.

Aus der DE 197 08 096 A1 ist ein Bearbeitungszentrum nach dem Oberbegriff von Anspruch 1 bekannt, wobei mindestens eine Arbeitsspindel fahrbar ist und jede Arbeitsspindel mindestens ein im Wesentlichen kreisförmiger, um eine zentrale Achse drehbarer Werkzeugspeicher mit Speicherplätzen zur Ablage des oder der Werkzeuge durch die Arbeitsspindel (n) zugeordnet ist.

Aus der DE 198 53 945 A1 ist eine Werkzeugmaschine mit einer ein Werkzeug aufnehmenden Spindel, einem eine Palette aufnehmenden Werkstücktisch, der in eine Palettenwechselposition bringbar ist, einem Palettenwechsler, mit dem eine in Palettenwechselposition befindliche Palette übernehmbar und um eine vertikale Schwenkachse in eine Warteposition schwenkbar ist und umgekehrt, einem Bedientableau und zueinander orthogonalen Verfahrachsen bekannt.

Der Erfindung liegt die Aufgabe zugrunde, eine Werkzeugmaschine der eingangs genannten Art so zu verbessern, dass sich Verfahrbewegungen gering halten lassen.

Diese Aufgabe wird bei der eingangs genannten Werkzeugmaschine erfindungsgemäß dadurch gelöst, dass an dem Maschinenbett ein Rahmen mit gegenüberliegenden Stützen angeordnet ist, dass eine Mehrzahl von Bearbeitungsstationen vorgesehen ist, wobei jede Bearbeitungsstation mindestens einen Werkzeugträger aufweist, dass eine Mehrzahl von Werkzeugträgern in einer Reihe angeordnet ist, dass eine Mehrzahl von Reihen mit Werkzeugträgern vorgesehen ist, wobei die Stützen die Reihen mit Werkzeugträgern halten und dass der Werkstückträger zwischen den Reihen verfahrbar ist.

Durch die erfindungsgemäße Lösung lässt sich ein automatischer Werkzeugwechsel durchführen, indem ein oder mehrere Werkzeuge oder Werkzeugteile, welche durch die Werkzeughalteeinrichtung gehalten sind, über den Werkstückträger an eine Werkzeugwechselposition verfahren werden. Es ist dadurch möglich, einen Werkzeugwechsel auch bei beengten Platzverhältnissen durchzuführen. Es ist auch dann nicht mehr notwendig, dass ein Bediener in den Arbeitsraum der Werkzeugmaschine zum Werkzeugwechsel eingreifen muss. Insbesondere muss eine Abdeckung des Arbeitsraums nicht geöffnet werden.

Bei der erfindungsgemäßen Lösung ist die Werkzeughalteeinrichtung (und damit gehaltene Werkzeuge) über den zugeordneten Werkstückträger verfahrbar. Die Werkzeughalteeinrichtung mit einem gehaltenen Werkzeug lässt sich dann an eine Werkzeugwechselposition verfahren bzw. sie lässt sich so verfahren, dass ein Werkzeug von einem Werkzeugträger aufnehmbar ist. Erfindungsgemäß wird als der Werkstückträger als Werkzeugwechselschlitten benutzt. Die erfindungsgemäße Lösung lässt sich insbesondere einsetzen, wenn ein oder mehrere Werkzeugträger translationsfest an einem Maschinengestell wie beispielsweise einem portalförmigen Rahmen gehalten sind.

Die Bewegungsachsen der Werkzeughalteeinrichtung sind die Bewegungsachsen des Werkstückträgers. Der konstruktive Aufwand und der steuerungstechnische Aufwand für einen automatisierten Werkzeugwechsel ist dadurch gering gehalten.

Günstigerweise ist die Werkzeughalteeinrichtung bezüglich des mindestens einen Werkzeugträgers über den Werkstückträger zum Werkzeugwechsel positionierbar. Es lässt sich dadurch ein automatischer Werkzeugwechsel durchführen. Von einem Werkzeugträger gelöste Werkzeuge lassen sich abführen bzw. es lassen sich Werkzeuge einem Werkzeugträger zuführen.

Es kann vorgesehen sein, dass die Werkzeughalteeinrichtung an dem Werkstückträger lösbar fixierbar ist. Während eines Bearbeitungsvorgangs eines Werkstücks, bei welchem das Werkstück an dem Werkstückträger eingespannt ist, ist dann die Bearbeitung durch die Werkzeughalteeinrichtung nicht gestört. Bei Bedarf, d. h. bei einem durchzuführenden Werkzeugwechsel, lässt sich die Werkzeughalteeinrichtung an dem Werkstückschlitten fixieren.

Beispielsweise ist die Werkzeughalteeinrichtung auf den Werkstückträger aufsteckbar. Sie lässt sich dadurch auf einfache Weise an dem Werkstückträger fixieren. Es sind auch andere Möglichkeiten der Fixierung möglich, wie beispielsweise eine formschlüssige Fixierung.

Es ist eine Mehrzahl von Bearbeitungsstationen vorgesehen, wobei jede Bearbeitungsstation mindestens einen Werkzeugträger aufweist. Bei einer solchen Werkzeugmaschine können in unterschiedlichen

Bearbeitungsstationen unterschiedliche Bearbeitungsvorgänge durchgeführt werden. Über den Werkstückträger werden Werkstücke von Bearbeitungsstation zu Bearbeitungsstation transportiert. Ein Werkzeugwechsel muss, wenn eine genügende Anzahl von Bearbeitungsstationen vorhanden ist, dann nur noch bei Werkzeugverschleiß durchgeführt werden. Insbesondere sind die Bearbeitungsstationen bezüglich eines Maschinengestells fest angeordnet.

Eine Mehrzahl von Werkzeugträgern ist in einer Reihe angeordnet. Dadurch lassen sich die Verfahrbewegungen zwischen unterschiedlichen Bearbeitungsstationen gering halten. Es ist dadurch auch möglich, den Platzbedarf der Werkzeugmaschine gering zu halten.

Es ist weiterhin eine Mehrzahl von Reihen mit Werkzeugträgern vorgesehen. Beispielsweise liegen Reihen sich gegenüber. Es lässt sich dadurch eine Werkzeugmaschine mit optimierter Platznutzung realisieren.

Der Werkstückträger ist zwischen den Reihen verfahrbar. Es lässt sich dadurch eine Vielzahl von Bearbeitungsvorgängen durchführen, wobei sich die Verfahrbewegungen gering halten lassen. Der Platzbedarf der Werkzeugmaschine lässt sich dadurch auch gering halten.

Es ist vorgesehen, dass der Werkstückträger in einer ersten Richtung verfahrbar ist, beispielsweise in einer X-Richtung, welche im Wesentlichen horizontal ausgerichtet ist.

Die Bewegungsmöglichkeiten lassen sich erhöhen, wenn der Werkstückträger in einer zweiten Richtung quer und insbesondere senkrecht zur ersten Richtung verfahrbar ist. Bei der zweiten Richtung kann es sich um eine Y-Richtung handeln. Diese ist insbesondere parallel zur Vertikalen ausgerichtet.

Wenn der Werkstückträger in einer dritten Richtung quer und insbesondere senkrecht zur ersten Richtung und quer und insbesondere senkrecht zur zweiten Richtung verfahrbar ist, dann werden die Bewegungsmöglichkeiten weiter erhöht. Insbesondere handelt es sich bei der dritten Richtung um eine Z-Richtung, welche eine horizontale Richtung senkrecht zur X-Richtung sein kann. Über eine Beweglichkeit in der Z-Richtung läßt sich auch der Werkstückträger aus einem Arbeitsraum herausfahren; dadurch können bearbeitete Werkstücke auf einfache Weise von dem Werkstückträger entnommen werden bzw. dieser kann auf einfache Weise neu beladen werden. Es ist dann auch auf einfache Weise eine Fixierung der Werkzeughalteeinrichtung an dem Werkstückträger ermöglicht bzw. eine Beladung oder Entladung der Werkzeughalteeinrichtung ermöglicht.

Eine weitere Bewegungsmöglichkeit für den Werkstückträger und damit für die Werkzeughalteeinrichtung ergibt sich, wenn der Werkstückträger drehbar ist. Es lassen sich dadurch Werkstücke (und auch Werkzeuge zum Werkzeugwechsel) in einem Arbeitsraum in Winkelstellungen bezüglich Werkzeughaltern positionieren.

Günstig ist es, wenn eine Werkzeuglöseeinrichtung und/oder Werkzeugfixierungseinrichtung mit dem Werkstückträger verbunden ist. Die Werkzeuglöseeinrichtung/Werkzeugfixierungseinrichtung kann dabei durch eine einzige Einrichtung realisiert sein. Die Werkzeuglöseeinrichtung bzw. Werkzeugfixierungseinrichtung ist dann mit dem Werkstückträger verfahrbar. Über die Werkzeuglöseeinrichtung lässt sich ein Werkzeug an einem Werkzeughalter lösen. Über die Werkzeugfixierungseinrichtung lässt sich ein Werkzeug an einem Werkzeughalter fixieren. Die Werkzeuglöseeinrichtung bzw. Werkzeugfixierungseinrichtung kann integral an der Werkzeughalteeinrichtung gebildet sein.

Günstig ist es, wenn mindestens eine Ablagestelle für eine oder mehrere Werkzeughalteeinrichtungen vorgesehen ist. Die mindestens eine Ablagestelle ist insbesondere an einem Maschinengestell angeordnet. Eine solche Ablagestelle kann als Lagerort für Werkzeughalteeinrichtungen dienen. Die Werkzeughalteeinrichtung lässt sich beispielsweise mit einem oder mehreren Werkzeugen bestücken und an einer Ablagestelle ablegen. Ein Werkstückträger kann vor oder nach einer Werkstückbearbeitung, wenn kein Werkstück an ihm gehalten ist, die Werkzeughalteeinrichtung von der Ablagestelle aufnehmen und sie dem entsprechenden Werkzeugträger zuführen. Dort kann ein Werkzeugwechsel erfolgen. Die Werkzeughalteeinrichtung mit dem ausgetauschten Werkzeug wird dann über den Werkstückträger wieder an die Ablagestelle geführt. Anschließend kann der Werkstückträger ein Werkstück zur Bearbeitung mit dem neuen Werkzeug aufnehmen und dem Werkzeug zuführen.

Die nachfolgende Beschreibung eines bevorzugten Ausführungsbeispiels dient im Zusammenhang mit der Zeichnung der näheren Erläuterung der Erfindung. Es zeigen:
- Figur 1: eine perspektivische Teilansicht eines ersten Ausführungsbei- spiels einer erfindungsgemäßen Werkzeugmaschine;
- Figur 2: eine perspektivische Darstellung eines Ausführungsbeispiels eines Werkstückträgers;
- Figur 3: eine Vorderansicht eines Ausführungsbeispiels einer Werk- zeugmaschine, welche nicht unter die Ansprüche fällt;
- Figur 4: eine Draufsicht von oben auf die Werkzeugmaschine gemäß Figur 3 und
- Figur 5: eine schematische Darstellung eines Ausführungsbeispiels eines Werkzeughalters.

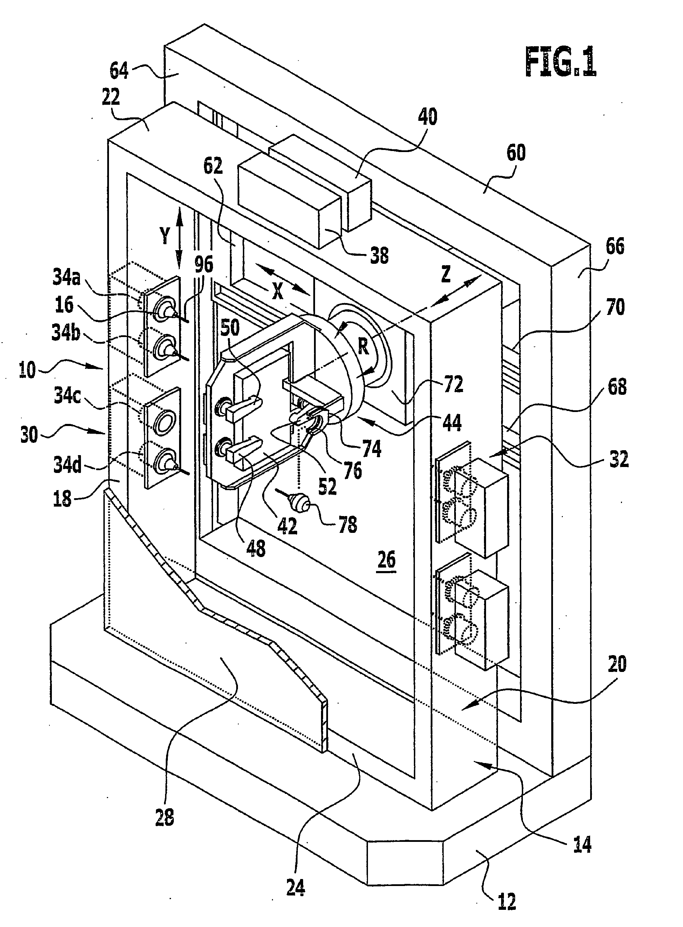

Ein Ausführungsbeispiel einer erfindungsgemäßen Werkzeugmaschine, welche in Figur 1 teilweise gezeigt und dort als Ganzes mit 10 bezeichnet ist, umfasst ein Maschinenbett 12. An dem Maschinenbett 12 sitzt ein Rahmen 14, welcher eine Mehrzahl von Werkzeugträgern 16 hält.

Der Rahmen 14 weist beispielsweise gegenüberliegende Stützen 18, 20 auf. Diese erstrecken sich über dem Maschinenbett 12 beispielsweise in vertikaler Richtung. Die Stützen 18 sind an ihrem oberen Ende über eine Querstütze 22 verbunden. Es kann vorgesehen sein, dass die Stützen 18, 20 an ihrem unteren Ende im Bereich des Maschinenbetts 12 über eine weitere Querstütze 24 verbunden sind. Ein Arbeitsraum 26 zur Bearbeitung von Werkstücken ist zwischen den Stützen 18, 20 und 22, 24 gebildet. In dem gezeigten Ausführungsbeispiel ist der Arbeitsraum 26 quaderförmig.

Der Arbeitsraum 26 ist zu einer Vorderseite hin durch eine Abdeckung 28 abgedeckt. (In Figur 1 ist die Abdeckung 28 teilweise gezeigt.)

Die Stützen 18 und 20 halten jeweils eine Reihe 30, 32 von Werkzeugträgern. Bei den Werkzeugträgern handelt es sich insbesondere um Werkzeugspindeln. Diese können translatorisch feststehend oder beweglich sein.

Bei dem gezeigten Ausführungsbeispiel hält die Stütze 18 vier Werkzeugträger 34a, 34b, 34c, 34d. Bei den Werkzeugträgern 34a, 34b, 34c, 34d handelt es sich beispielsweise um Werkzeugspindeln. An diesen Werkzeugträgern sind Werkzeuge 36 zur Bearbeitung von Werkstücken fixierbar. Die Werkzeugträger sind fest an dem Rahmen 14 montiert und insbesondere nicht linear verschieblich.

Die Reihe 32 umfaßt ebenfalls eine Mehrzahl von Werkzeugträgern. Es kann auch vorgesehen sein, daß die Querstütze 22 einen oder mehrere Werkzeugträger 38, 40 hält. Die Werkzeugträger 38, 40 können auch in einer Reihe parallel zu einer Z-Richtung und/oder parallel zu einer X-Richtung angeordnet sein.

Eine Reihe 30, 32 umfaßt eine oder mehrere Bearbeitungsstationen. Beispielsweise ist mittels der Werkzeugträger 34a, 34b eine erste Bearbeitungsstation und mittels der Werkzeugträger 34c und 34d eine zweite Bearbeitungsstation gebildet. Über die erste Bearbeitungsstation lassen sich beispielsweise simultan zwei Bohrungen in ein Werkstück einbringen. Über die zweite Bearbeitungsstation lassen sich simultan beispielsweise zwei weitere Bohrungen mit anderem Durchmesser einbringen.

Bei dem in Figur 1 gezeigten Ausführungsbeispiel sind, wenn Werkzeuge 36 wie Bohrwerkzeuge an den Werkzeugträgern 34a, 34b, 34c, 34d fixiert sind, diese in einer Linie ausgerichtet, welche im wesentlichen parallel zur Höhenrichtung der Stütze 18 bzw. 20 ist.

Es ist grundsätzlich auch möglich, wie anhand der Werkzeugträger 38, 40 gezeigt, daß die Werkzeuge in einer Linie ausgerichtet sind, welche quer zu dieser Höhenrichtung liegt.

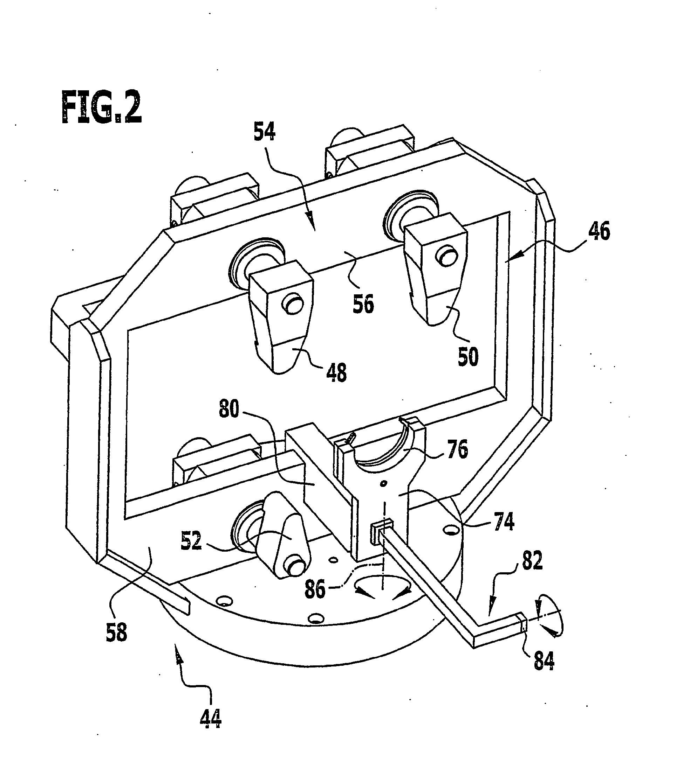

Ein Werkstück 42 ist zur Bearbeitung in dem Arbeitsraum 26 bezüglich der Werkzeugträger 16 über einen Werkstückträger 44 (Figur 1, Figur 2) positionierbar. An dem Werkstückträger 44 sind ein oder mehrere Werkstücke 42 fixierbar. Der Werkstückträger 44 umfaßt dazu eine Fixierungseinrichtung 46. Diese umfaßt beispielsweise Klemmbacken 48, 50, 52 zum Einklemmen eines Werkstücks 42.

Bei dem in Figur 2 gezeigten Ausführungsbeispiel weist der Werkstückträger 44 einen Halterahmen 54 auf, an dem die Klemmbacken 48, 50, 52 sitzen. Die Klemmbacken 48, 50 sitzen dabei an einer ersten Querstrebe 56 des Halterahmens 54 und die Klemmbacke 52 sitzt an einer beabstandet gegenüberliegenden zweiten Querstrebe 58 des Halterahmens 54.

Werkstücke 42, welche in dem Werkstückträger 44 eingespannt sind, sind über den Werkstückträger 44 verfahrbar und insbesondere in dem Arbeitsraum 26 verfahrbar. Der Werkstückträger 44 ist dazu als Werkstückschlitten ausgebildet.

Zur Führung des Werkstückträgers 44 ist ein Rahmen 60 vorgesehen, welcher portalartig ausgebildet ist. An dem Rahmen 60 ist in einer beispielsweise vertikalen Richtung Y ein weiterer Rahmen 62 linear verschieblich geführt. Dazu sind an einer Innenseite von Stützen 64, 66 des Rahmens 60 Führungen für den Rahmen 62 angeordnet.

Der Rahmen 60 bildet dann einen "Außen"-Rahmen und der Rahmen 62 einen "Innen"-Rahmen. Diese Art von Führung wird auch als Box-in-Box-Konzept bezeichnet, da der Rahmen 62 als "Kasten" in dem Rahmen 60 als "Kasten" geführt ist.

An dem Rahmen 62 wiederum ist der Werkstückträger 44 in einer Richtung X geführt. Diese Richtung X ist quer und insbesondere senkrecht zu der Richtung Y, in welcher der Rahmen 62 an dem Rahmen 60 geführt ist. Die Richtung X ist insbesondere eine horizontale Richtung

Der Rahmen 62 weist gegenüberliegende Querstützen 68, 70 auf, welche insbesondere parallel sind. Diese Querstützen 68, 70 sind dabei in der X-Richtung orientiert. An den jeweils einander zugewandten Seiten dieser Querstützen 68, 70 sind Führungen für den Werkstückträger 44 angeordnet, damit dieser eben in der Richtung X verfahrbar ist. Es wird dadurch wiederum ein Box-in-Box-Konzept realisiert, da der "Kasten" Werkstückträger 44 in dem Rahmen 62 verschieblich geführt ist.

Es kann auch noch vorgesehen sein, daß der Werkstückträger 44 in einer Z-Richtung quer und insbesondere senkrecht zur Y-Richtung und quer und insbesondere senkrecht zur X-Richtung verschieblich ist. Dazu ist ein Z-Schlitten (Pinole) 72 vorgesehen, an welchem der Werkstückträger 44 gehalten ist. Dieser Z-Schlitten 72 ist eben in der Z-Richtung verschieblich, wodurch der Werkstückträger 44 in der Z-Richtung verschieblich ist.

Über die Rahmen 60, 62 und den Z-Schlitten 72 ist damit der Werkstückträger 44 und entsprechende von ihm gehaltene Werkstücke 42 in der X-, Y- und Z-Richtung verschieblich.

Der Rahmen 62 in seiner Verschiebungsbewegung am Rahmen 60, die Verschiebungsbewegung des Z-Schlittens 72 an dem Rahmen 62 in X-Richtung und die Verschiebungsbewegung des Z-Schlittens 72 in der Z-Richtung sind angetrieben, beispielsweise durch Linearmotoren oder Kugelgewindetriebe.

Es kann auch noch vorgesehen sein, daß der Werkstückträger 44 an dem Z-Schlitten 72 drehbar gehalten ist (in Figur 1 angedeutet durch R) mit einer Drehachse, welche parallel zur Z-Richtung ausgerichtet ist. Insbesondere lassen sich beliebige Drehwinkel des Werkstückträgers 44 bezüglich des Z-Schlittens 72 einstellen. Der Werkstückträger 44 ist dazu über ein Drehlager an dem Z-Schlitten 72 gelagert und es ist ein entsprechender Antrieb zur Drehbewegung vorgesehen.

Ein Werkstück 42 läßt sich dann über den Werkstückträger 44 in jeder (X, Y, Z)-Position in dem Arbeitsraum 26 positionieren und weiterhin in jeder Winkelstellung bezogen auf die Drehachse des Werkstückträgers 44 in dem Arbeitsraum 26 positionieren.

Erfindungsgemäß ist es vorgesehen, daß eine Werkzeughalteeinrichtung 74 mit dem Werkstückträger 44 verbunden und insbesondere lösbar verbunden ist. Die Werkzeughalteeinrichtung 74 umfaßt eine oder mehrere Werkzeugaufnahmen 76, in die jeweils ein Werkzeug 78 (Figur 1) einlegbar ist. Ein eingelegtes Werkzeug 78 läßt sich dann über den Werkstückträger 44 in den Bewegungsachsen des Werkstückträgers 44 verfahren bzw. drehen.

Über die Werkzeughalteeinrichtung 74 läßt sich ein automatischer Werkzeugwechsel durchführen. Der Werkstückträger 44 mit der Werkzeughalteeinrichtung 74 wird an einen entsprechenden Werkzeugträger 16 herangefahren. Der Werkstückträger 44 wird so verfahren, daß ein an dem entsprechenden Werkzeugträger 16 fixiertes Werkstück in der Werkzeugaufnahme 76 liegt. Durch eine entsprechende Verfahrbewegung wird das Werkzeug gelöst und von dem Werkzeugträger entnommen. Über die Bewegung des Werkstückträgers 44 kann dann das gelöste Werkzeug aus dem Arbeitsraum 26 herausgefahren werden. Ein neues Werkzeug wird in die Werkzeugaufnahme 76 eingelegt und zur dem entsprechenden Werkzeugträger 16 verfahren und dort wiederum fixiert.

Es läßt sich damit ein automatischer Werkzeugwechsel durchführen, ohne daß ein Bediener in den Arbeitsraum eingreifen muß. Es ist dabei insbesondere vorgesehen, daß der Z-Schlitten 72 so weit aus dem Arbeitsraum 26 herausfahrbar ist, daß ein Werkzeug aus dem Werkzeugaufnahmeraum 76 der Werkzeughalteeinrichtung 74 auf einfache Weise entnommen werden kann bzw. auf einfache Weise ein neues Werkzeug 78 in die Werkzeugaufnahme 76 einlegbar ist.

Die Bewegungsachsen der Werkzeughalteeinrichtung 74 sind die Bewegungsachsen des Werkstückträgers 44, so daß durch die Werkzeughalteeinrichtung 74 gehaltene Werkzeuge an jede Position bringbar sind, an die auch Werkstücke bringbar sind.

Bei einer Ausführungsform ist es vorgesehen, daß die Werkzeughalteeinrichtung 74 lösbar fixierbar an dem Halterahmen 54 gehalten ist. Bei dem in Figur 2 gezeigten Ausführungsbeispiel ist die Werkzeughalteeinrichtung 74 lösbar fixierbar an der zweiten Querstrebe 58 des Halterahmens 54 gehalten. Die Werkzeughalteeinrichtung 74 umfaßt dazu ein Halteelement 80 zur Fixierung an dem Halterahmen 54. Das Halteelement 80 wiederum hält die Werkzeugaufnahme 76.

Es ist dadurch möglich, die Werkzeughalteeinrichtung 74 für die Bearbeitung von Werkstücken 42 von dem Werkstückträger 44 zu entfernen, so daß die Werkzeughalteeinrichtung 74 während Bearbeitungsvorgängen nicht stört. Zum Werkzeugwechsel wird die Werkzeughalteeinrichtung 74 an dem Halterahmen 54 fixiert. Beispielsweise wird die Werkzeughalteeinrichtung 74 auf diesen aufgesteckt.

Für einen Werkzeugwechsel ist vorzugsweise kein Werkstück 42 an dem Werkstückträger 44 fixiert.

An dem Werkstückträger 44 kann eine Werkzeuglöseeinrichtung/Werkzeugfixierungseinrichtung 82 angeordnet sein. Bei dem in Figur 2 gezeigten Ausführungsbeispiel ist diese an der Werkzeughalteeinrichtung 74 angeordnet. Die Werkzeuglöseeinrichtung und die Werkzeughalteeinrichtung können über eine einzige Einrichtung gebildet sein. Über die Werkzeuglöseeinrichtung/Werkzeugfixierungseinrichtung 82 läßt sich auf ein oder mehrere Fixierungselemente eines Werkzeugträgers und insbesondere einer Werkzeugspindel einwirken, um diese so zu betätigen, daß ein fixiertes Werkzeug zur Entnahme gelöst wird oder daß ein eingeführtes Werkzeug fixiert wird.

Die Werkzeuglöseeinrichtung/Werkzeugfixierungseinrichtung umfaßt beispielsweise einen beweglichen Kopf 84 zum Zugriff an ein entsprechendes Fixierungselement eines Werkzeugträgers.

Es kann vorgesehen sein, daß die Werkzeuglöseeinrichtung/Werkzeugfixierungseinrichtung 82 um eine Achse 86 schwenkbar angeordnet ist. Die Werkzeuglöseeinrichtung/Werkzeugfixierungseinrichtung 82 läßt sich dadurch von einer Lagerstellung in eine Einsatzstellung bringen und umgekehrt. (In Figur 2 ist eine Einsatzstellung gezeigt.)

Durch die erfindungsgemäße Lösung läßt sich auf einfache Weise ein automatischer Werkzeugwechsel durchführen. Über den Werkstückträger 44 mit verbundener Werkzeughalteeinrichtung 74 lassen sich Werkzeuge 78 den Werkstückträgern 16 zuführen bzw. von diesen abführen. Über die Beweglichkeit des Werkstückträgers 44 lassen sich auch entsprechende Bewegungen zur Fixierung von Werkzeugen 78 an den entsprechenden Werkzeugträgern 16 bzw. zur Lösung von den entsprechenden Werkzeugträgern 16 durchführen. Zum Werkzeugwechsel muß dann nicht von Hand in den Arbeitsraum 26 eingegriffen werden. Beispielsweise muß die Abdeckung 28 nicht geöffnet werden. Es ist auch ein Werkzeugwechsel möglich, wenn beengte Platzverhältnisse vorliegen.

Bei entsprechender Beweglichkeit des Werkstückträgers 44 lässt sich zum Einlegen eines Werkstücks in die Werkzeugaufnahme 76 bzw. zum Herausnehmen eines Werkstücks aus der Werkzeugaufnahme 76 die Werkzeughalteeinrichtung 74 so weit aus dem Arbeitsraum 26 herausführen, dass eine leichte Zugänglichkeit realisiert ist. Die Werkzeughalteeinrichtung 74 lässt sich dann auch auf einfache Weise an dem Werkstückträger 44 fixieren bzw. von diesem entnehmen.

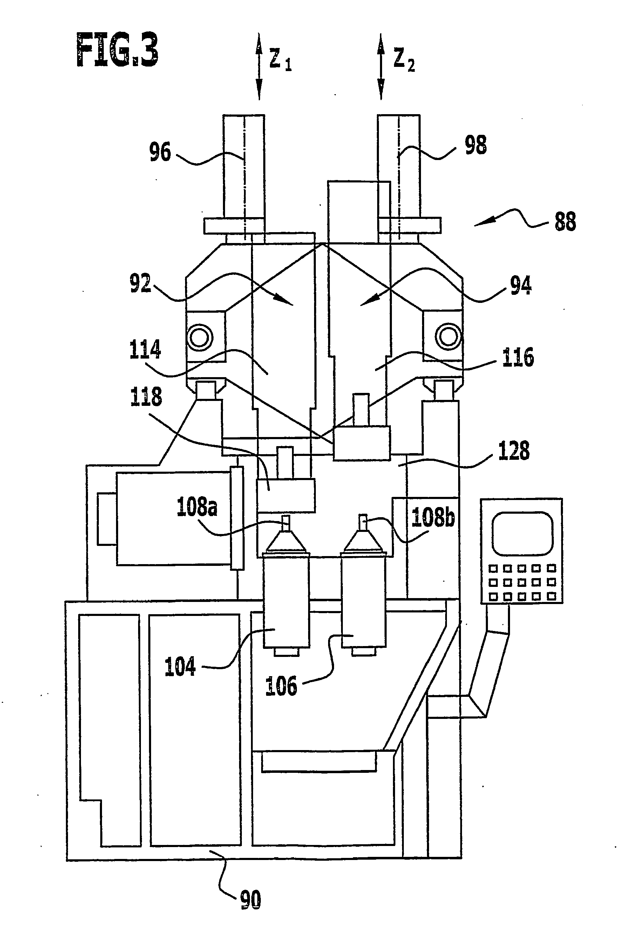

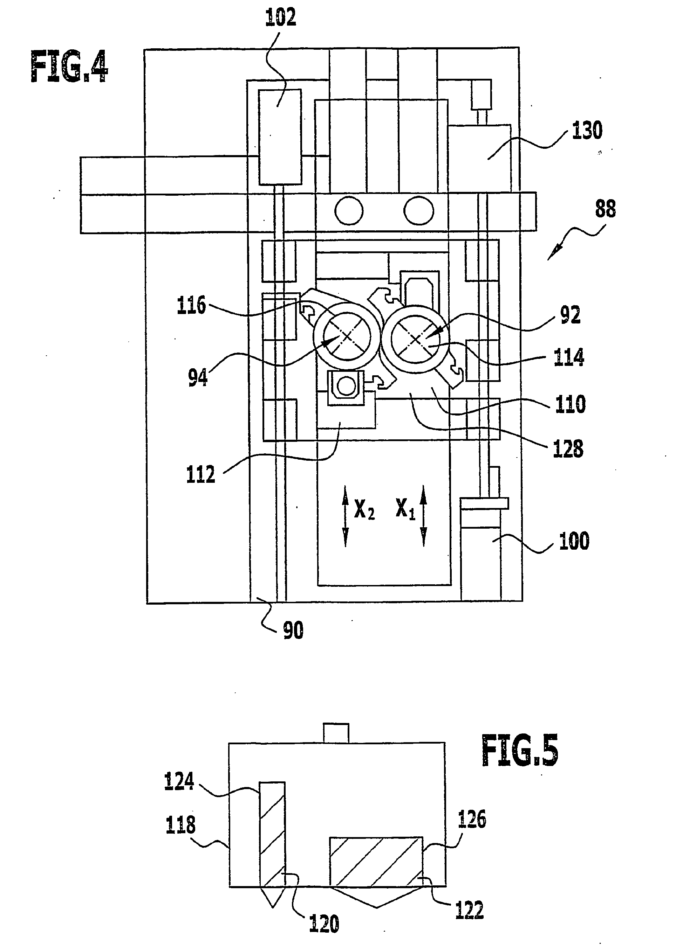

Bei einem weiteren Ausführungsbeispiel einer Werkzeugmaschine, welche in den Figuren 3 und 4 gezeigt, und welche nicht unter die Ansprüche fällt, und dort mit 88 bezeichnet ist, sind an einem Maschinengestell 90 ein erster Werkstückträger 92 und ein zweiter Werkstückträger 94 verfahrbar angeordnet. Die Werkstückträger 92, 94 sind insbesondere als Spindeln ausgebildet.

Der erste Werkstückträger 92 ist in einer insbesondere vertikalen Richtung Z₁ verfahrbar. Dazu ist ein entsprechender erster Antrieb 96 vorgesehen. Auf die gleiche Weise ist der zweite Werkstückträger 94 in einer insbesondere vertikalen Richtung Z₂ verfahrbar. Für diese Verfahrbewegung ist ein zweiter Antrieb 98 vorgesehen.

Weiterhin ist der erste Werkstückträger 92 in einer insbesondere horizontalen Richtung X₁ verfahrbar. Zum Antrieb der Verfahrbewegung ist ein dritter Antrieb 100 vorgesehen. Auf die gleiche Weise ist der zweite Werkstückträger 94 in einer insbesondere horizontalen Richtung X₂ linear beweglich. Zum Antrieb der Bewegung ist ein vierter Antrieb 102 vorgesehen.

Die Richtungen Z₁ und Z₂ sind parallel zueinander. Ferner sind die Richtungen X₁ und X₂ parallel zueinander.

Über die beiden Werkstückträger 92 und 94 lassen sich Werkstücke bezüglich Werkzeugträgern 104, 106 mit entsprechenden Werkzeugen 108a,108b positionieren (Figur 3).

Die beiden Werkstückträger 92, 94 sind beispielsweise an jeweiligen Schlitten 110, 112 zur Bewegung in der X₁- bzw. X₂-Richtung gehalten. Diese Schlitten 110, 112 können als Dreiecksschlitten ausgebildet sein. An diesen Schlitten 110, 112 sind jeweilige Werkstückspindeln 114, 116 zur Bereitstellung der Werkstückträger 92, 94 in Z₁-Richtung bzw. Z₂-Richtung verschieblich geführt.

Eine entsprechende Werkzeugmaschine ist in der WO 2004/012888 A1 beschrieben.

An den Werkstückspindeln 114, 116 als Werkstückträger 92, 94 läßt sich indirekt über einen jeweiligen Werkstückhalter oder direkt ein Werkstück fixieren, um dieses dem entsprechenden Werkzeugträger 104 bzw. 106 zuzuführen und bei der Bearbeitung zu halten und zu positionieren.

Erfindungsgemäß ist eine Werkzeughalteeinrichtung 118 vorgesehen (Figuren 3 und 5), welche an den jeweiligen Werkstückträgern 92 und 94 und insbesondere an deren Werkstückspindeln 114 und 116 fixierbar ist. Wenn eine solche Werkzeughalteeinrichtung 118 an dem zugeordneten Werkstückträger 92 bzw. 94 fixiert ist, dann läßt sich diese mit dem Werkstückträger in der X₁-, Z₁-Richtung bzw. X₂-, Z₂-Richtung bewegen.

Die Werkzeughalteeinrichtung 118 kann wiederum ein oder mehrere Werkzeuge 120, 122 aufnehmen. Beispielsweise sind an der Werkzeughalteeinrichtung 118 eine oder mehrere Aufnahmen 124, 126 für entsprechende Werkzeuge 120, 122 gebildet oder angeordnet.

Über die Werkstückträger 92, 94 lassen sich die entsprechenden Werkzeuge 120, 122, welche an einer Werkzeughalteeinrichtung 118 gehalten sind, zu den Werkzeugträgern 104, 106 bewegen.

Mittels den Werkstückträgern 92, 94 läßt sich dadurch ein Werkstückwechsel durchführen: Über eine Werkzeughalteeinrichtung 118 kann durch entsprechende Positionierung des jeweiligen Werkstückträgers 92, 94 zu dem jeweiligen Werkzeugträger 104, 106 ein Werkzeug entnommen werden und ein neues Werkzeug an den entsprechenden Werkzeugträger 104, 106 abgegeben werden.

Die Bewegungsachsen der Werkzeughalteeinrichtung 118 sind dabei die Bewegungsachsen X₁, Z₁ bzw. X₂, Z₂ des Werkstückträgers 92 bzw. 94.

Mittels der Werkzeughalteeinrichtung 118, welche sich anstelle eines Werkstücks oder eines Werkstückhalters an den Werkstückträgern 92 bzw. 94 fixieren läßt, läßt sich ein automatischer Werkzeugwechsel durchführen. Zu einem solchen Werkzeugwechsel muß ein Bediener nicht in einen Arbeitsraum 128 eingreifen. Insbesondere muß keine Türe einer Arbeitsraumverkleidung geöffnet werden.

Es ist dabei günstig, wenn die Werkzeugmaschine 88 ein oder mehrere Ablagestellen 130 für Werkzeughalteeinrichtungen 118 aufweist. Eine Werkzeughalteeinrichtung 118 wird mit den entsprechenden Werkzeugen 120, 122 bestückt und an einer Ablagestelle 130 gelagert. Der Werkstückträger 92, 94 kann dann die entsprechende Werkzeughalteeinrichtung 118 von der Ablagestelle 130 abholen.

Auf die gleiche Weise kann der entsprechende Werkstückträger 92, 94 eine Werkzeughalteeinrichtung 118 nach einem Werkzeugtausch an der Ablagestelle 130 abliefern.

Nachdem eine Werkzeughalteeinrichtung 118 abgelegt ist, kann der entsprechende Werkstückträger 92, 94 ein Werkstück aufnehmen und dem entsprechenden Werkzeug 108a bzw. 108b zur Bearbeitung zuführen.

## Patentansprüche

1. Werkzeugmaschine mit einem Maschinenbett (12), mit mindestens einem Werkzeugträger (16) und mindestens einem verfahrbaren Werkstückträger (44), über den ein oder mehrere Werkstücke (42) zur Bearbeitung positionierbar sind und bei der Bearbeitung gehalten sind, wobei eine Werkzeughalteeinrichtung (74) mit dem mindestens einen Werkstückträger (44) verbunden ist und über den zugeordneten Werkstückträger (44) verfahrbar ist und die Werkzeughalteeinrichtung (74) bezüglich des mindestens einen Werkzeugträgers (16) über den Werkstückträger (44) zum Werkzeugwechsel positionierbar ist, wobei die Bewegungsachsen (X; Y; Z; X₁; X₂; Z₁; Z₂) der Werkzeughalteeinrichtung (74) die Bewegungsachsen (X; Y; Z; X₁; X₂; Z₁; Z₂) des Werkstückträgers (44) sind,
**dadurch gekennzeichnet, dass** an dem Maschinenbett (12) ein Rahmen (14) mit gegenüberliegenden Stützen (18, 20) angeordnet ist, dass eine Mehrzahl von Bearbeitungsstationen vorgesehen ist, wobei jede Bearbeitungsstation mindestens einen Werkzeugträger (34a; 34b, 34c, 34d) aufweist, dass eine Mehrzahl von Werkzeugträgern (34a, 34b, 34c, 34d) in einer Reihe (30, 32) angeordnet ist, dass eine Mehrzahl von Reihen (30, 32) mit Werkzeugträgern vorgesehen ist, wobei die Stützen (18, 20) die Reihen mit Werkzeugträgern (16) halten, und dass der Werkstückträger (44) zwischen den Reihen (30, 32) verfahrbar ist.

2. Werkzeugmaschine nach Anspruch 1, **dadurch gekennzeichnet, dass** die Werkzeughalteeinrichtung (74) an dem Werkstückträger (44) lösbar fixierbar ist.

3. Werkzeugmaschine nach Anspruch 2, **dadurch gekennzeichnet, dass** die Werkzeughalteeinrichtung (74) auf den Werkstückträger (44) aufsteckbar ist.

4. Werkzeugmaschine nach einem der vorangehenden Ansprüche, **dadurch gekennzeichnet, dass** der Werkstückträger (44) in einer ersten Richtung (X; X₁; X₂) verfahrbar ist.

5. Werkzeugmaschine nach Anspruch 4, **dadurch gekennzeichnet, dass** der Werkstückträger (44) in einer zweiten Richtung (Y; Z₁; Z₂) quer zur ersten Richtung (X; X₁; X₂) verfahrbar ist.

6. Werkzeugmaschine nach Anspruch 5, **dadurch gekennzeichnet, dass** der Werkstückträger (44) in einer dritten Richtung (Z) quer zur ersten Richtung (X) und quer zur zweiten Richtung (Y) verfahrbar ist.

7. Werkzeugmaschine nach einem der vorangehenden Ansprüche, **dadurch gekennzeichnet, dass** der Werkstückträger (44) drehbar ist.

8. Werkzeugmaschine nach einem der vorangehenden Ansprüche, **dadurch gekennzeichnet, dass** eine Werkzeuglöseeinrichtung (82) und/oder Werkzeugfixierungseinrichtung (82) mit dem Werkstückträger (44) verbunden ist.

9. Werkzeugmaschine nach einem der vorangehenden Ansprüche, **dadurch gekennzeichnet, dass** mindestens eine Ablagestelle (130) für eine oder mehrere Werkzeughalteeinrichtungen (118) vorgesehen ist.

## Claims

1. A machine tool comprising a machine bed (12) with at least one tool carrier (16) and at least one moveable workpiece carrier (44) with which one or more workpieces (42) can be positioned for machining and are held during the machining, wherein a tool retaining device (74) is connected to the at least one workpiece carrier (44) and is moveable by the associated workpiece carrier (44) and the tool retaining device (74) can be positioned with respect to the at least one tool carrier (16) by the workpiece carrier (44) for the purposes of changing tools, wherein the axes of movement (X; Y; Z; X₁; X₂; Z₁; Z₂) of the tool retaining device (74) are the axes of movement (X; Y; Z; X₁; X₂; Z₁; Z₂) of the workpiece carrier (44),
**characterised in that** a framework (14) with opposed supports (18, 20) is arranged on the machine bed (12), **in that** a plurality of work stations is provided, each work station comprising at least one tool carrier (34a; 34b, 34c, 34d), **in that** a plurality of tool carriers (34a; 34b, 34c, 34d) is arranged in a row (30, 32), **in that** a plurality of rows (30, 32) with tool carriers is provided, the supports (18, 20) holding the rows with tool carriers (16) and **in that** the workpiece carrier (44) can be moved between the rows (30, 32).

2. A machine tool in accordance with claim 1, **characterised in that** the tool retaining device (74) is fixable to the workpiece carrier (44) in releasable manner.

3. A machine tool in accordance with Claim 2, **characterised in that** the tool retaining device (74) is adapted to be plugged-onto the workpiece carrier (44).

4. A machine tool in accordance with any of the preceding Claims, **characterised in that** the workpiece carrier (44) is moveable in a first direction (X; X₁; X₂).

5. A machine tool in accordance with Claim 4, **characterised in that** the workpiece carrier (44) is moveable in a second direction (Y; Z₁; Z₂) which is transverse to the first direction (X; X₁; X₂).

6. A machine tool in accordance with Claim 5, **characterised in that** the workpiece carrier (44) is moveable in a third direction (Z) which is transverse to the first direction (X) and transverse to the second direction (Y).

7. A machine tool in accordance with any of the preceding Claims, **characterised in that** the workpiece carrier (44) is rotatable.

8. A machine tool in accordance with any of the preceding Claims, **characterised in that** a tool releasing device (82) and/or a tool fixing device (82) is connected to the workpiece carrier (44).

9. A machine tool in accordance with any of the preceding Claims, **characterised in that** there is provided at least one stacking point (130) for one or more tool retaining devices (118).

## Revendications

1. Machine-outil comportant un banc de machine (12), comportant au moins un porte-outils (16) et au moins un porte-pièces à usiner (44) pouvant être déplacé, sur lequel une ou plusieurs pièces à usiner (42) peuvent être positionnées pour l'usinage et sont maintenues lors de l'usinage, un dispositif de retenue des outils (74) étant relié au porte-pièces à usiner (44) au moins au nombre de un et pouvant être déplacé au-dessus du porte-pièces à usiner (44) associé, et le dispositif de retenue des outils (74) pouvant être positionné par rapport au porte-outils (16) au moins au nombre de un au-dessus du porte-pièces à usiner (44) pour le changement d'outil, les axes de déplacement (X ; Y ; Z ; X₁ ; X₂ ; Z₁ ; Z₂) du dispositif de retenue des outils (74) correspondant aux axes de déplacement (X ; Y ; Z ; X₁ ; X₂ ; Z₁ ; Z₂) du porte-pièces à usinier (44), **caractérisée en ce qu'**un cadre (14) est disposé sur le banc de machine (12) avec des montants (18, 20) se faisant face, **en ce qu'**une pluralité de stations d'usinage sont prévues, chaque station d'usinage présentant au moins un porte-outils (34a, 34b, 34c, 34d), **en ce qu'**une pluralité de porte-outils (34a, 34b, 34c, 34d) sont disposés dans une rangée (30, 32), **en ce qu'**une pluralité de rangées (30, 32) sont prévues avec des porte-outils, les montants (18, 20) maintenant les rangées comportant des porte-outils (16), et **en ce que** le porte-outils (44) peut être déplacé entre les rangées (30, 32).

2. Machine-outil selon la revendication 1, **caractérisée en ce que** le dispositif de retenue des outils (74) peut être fixé de manière amovible sur le porte-pièces à usiner (44).

3. Machine-outil selon la revendication 2, **caractérisée en ce que** le dispositif de retenue des outils (74) peut être enfiché sur le porte-pièces à usiner (44).

4. Machine-outil selon l'une quelconque des revendications précédentes, **caractérisée en ce que** le porte-pièces à usiner (44) peut être déplacé dans une première direction (X ; X₁ ; X₂).

5. Machine-outil selon la revendication 4, **caractérisée en ce que** le porte-pièces à usiner (44) peut être déplacé dans une deuxième direction (Y ; Z₁ ; Z₂) de manière transversale par rapport à la première direction (X ; X₁ ; X₂).

6. Machine-outil selon la revendication 5, **caractérisée en ce que** le porte-pièces à usiner (44) peut être déplacé dans une troisième direction (Z) de manière transversale par rapport à la première direction (X) et de manière transversale par rapport à la deuxième direction (Y).

7. Machine-outil selon l'une quelconque des revendications précédentes, **caractérisée en ce que** le porte-pièces à usiner (44) est rotatif.

8. Machine-outil selon l'une quelconque des revendications précédentes, **caractérisée en ce qu'**un dispositif de libération d'un outil (82) et/ou un dispositif de fixation d'un outil (82) sont reliés au porte-pièces à usiner (44).

9. Machine-outil selon l'une quelconque des revendications précédentes, **caractérisée en ce qu'**au moins un emplacement de dépôt (130) est prévu pour un ou plusieurs dispositif(s) de retenue des outils (118).
